Europäisches Patentamt

European Patent Office

Office européen des brevets

(11) Veröffentlichungsnummer: **0 330 905**
**A2**

(12) **EUROPÄISCHE PATENTANMELDUNG**

(21) Anmeldenummer: **89102549.6**

(22) Anmeldetag: **15.02.89**

(51) Int. Cl.⁴: **B23Q 1/08**

(30) Priorität: **04.03.88 DE 3807102**

(43) Veröffentlichungstag der Anmeldung:
**06.09.89 Patentblatt 89/36**

(84) Benannte Vertragsstaaten:
**AT BE CH DE ES FR GB IT LI NL SE**

(71) Anmelder: **Hauser, Hermann**
**Otto-Lilienthal-Strasse 4**
**D-7835 Teningen 3(DE)**

(72) Erfinder: **Hauser, Hermann**
**Otto-Lilienthal-Strasse 4**
**D-7835 Teningen 3(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Spindel für Werkzeugmaschinen mit auswechselbaren Spindelteilen.**

(57) Die Erfindung betrifft eine Spindel (1) für Werkzeugmaschinen mit einer in einem äußeren Gehäuse gelagerten, unterteilten und eine Schnellkupplung (6) aufweisenden Mitnehmerwelle (5) für ein fliegend gelagertes und auswechselbares Werkzeug, wobei die Werkzeug-Spindel (1) ebenfalls unterteilt ist, vorzugsweise einen Steck-Anschlag und/oder eine - Anschlagsfläche und wenigstens eine Paßfläche (14, 16, 17) aufweist und ihr werkzeugseitiger Spindelteil (3) mittels Schnellverschluß (4) mit dem antriebsseitigen Spindelteil (2) lösbar und auswechselbar gekuppelt ist. Die erfindungsgemäße Spindel (1) kennzeichnet sich dadurch, daß der Schnellverschluß (4) Verriegelungselemente (7) aufweist, die in einem (2) der beiden Spindelteile (2, 3) bewegbar geführt sind und in Verriegelungsstellung jeweils mit einem abgeschrägten oder schräg stehenden Verriegelungsende (5) in eine Aussparung des anderen Spindelteils (3) eingreifen und daß die Verriegelungselemente (7) einen Antrieb für eine maschinelle Verriegelung und/oder Entriegelung· haben, wobei in Verriegelungsstellung durch die Schräge des abgeschrägten oder schräg stehenden Verriegelungsendes (7) eine den werkzeugseitigen Spindelteil (3) in seine Gebrauchsstellung drückende axiale Andruckkraft vorgesehen ist. Die erfindungsgemäße Spindel hat eine hohe Genauigkeit, ist schnell und einfach zu verriegeln und zu entriegeln und eignet sich auch für hohe Umdrehungszahlen.

EP 0 330 905 A2

## Spindel für Werkzeugmaschinen mit auswechselbaren Spindelteilen

Die Erfindung betrifft eine Spindel für Schleif-, Fräs-, Bohr- oder dgl. Werkzeugmaschinen mit einem äußeren Gehäuse und einer darin gelagerten, unterteilten und eine Schnellkupplung aufweisenden Mitnehmerwelle für ein vorzugsweise fliegend gelagertes und auswechselbares Schleif-, Fräs-, Bohr- oder dgl. Werkzeug, wobei die Werkzeugspindel ebenfalls unterteilt ist, vorzugsweise einen Steck-Anschlag und/oder eine -Anschlagsfläche und wenigstens eine Paßfläche aufweist und ihr werkzeugseitiger Spindelteil mittels Schnellverschluß mit dem antriebsseitigen Spindelteil lösbar und auswechselbar gekuppelt ist.

Gerade bei kompliziert ausgebildeten Werkstücken ist ein erheblicher Aufwand vonnöten, um die Werkzeugmaschinen an die notwendigen und unterschiedlichen Herstellungsvorgänge anzupassen. Dies ist selbst bei numerisch gesteuerten Werkzeugmaschinen der Fall, bei denen die Steuerung eines Bearbeitungsvorganges weitgehend automatisiert und entsprechend beschleunigt werden kann. Auch hier werden bei der Verwendung herkömmlicher Werkzeugspindeln dann zeitaufwendige Umrüstarbeiten erforderlich, wenn bei der Herstellung eines Werkstückes mit der Änderung des Bearbeitungsvorganges ein Werkzeugwechsel, notwendig wird. Häufig wird stattdessen das Werkstück auf eine Werkzeugmaschine mit einem anderen Werkzeug umgespannt, jedoch ist auch dies wegen der hohen Genauigkeitsanforderungen mit arbeits- und zeitaufwendigen Justierarbeiten verbunden.

Man hat daher bereits eine Werkzeugspindel geschaffen, bei der das Werkzeug, das an seiner zur Spindel weisenden Seite einen kegelförmigen Aufnahmedorn aufweist, über eine greiferartige und in eine Nut des Aufnahmedorns eingreifende Spannzange in die Arbeitsspindel gezogen wird. Diese Spannzange ist über eine Zugstange mit einem Tellerfederpaket verbunden, welches das Werkzeug in Gebrauchsstellung hält und dessen Federkraft durch ein Keilgetriebe verstärkt wird. Das Lösen des Werkzeugs erfolgt hydraulisch durch einen, in einem Druckmittel-Zylinder geführten Kolben, der das Tellerfederpaket zusammendrückt, das Keilgetriebe entriegelt und durch Druckbeaufschlagung der Zugstange die Spannzange öffnet. Durch die Vorwärtsbewegung der Zugstange und das Öffnen der Zange wird das Werkzeug freigegeben und aus der Arbeitsspindel ausgestoßen.

Bei dieser vorbekannten Werkzeugspindel rotieren mit dem Werkzeug die Spannzange, die Zugstange, das Tellerfederpaket, das Keilgetriebe und der gesamte Druckmittel-Zylinder. Dies hat einerseits den Vorteil, daß die bei derartigen Steilkegelwerkzeugen insbesondere bei hohen Umdrehungszahlen aufzubringede große Lösekraft nicht auch noch die Spindellagerung belastet, andererseits jedoch den wesentlichen Nachteil, daß die rotierenden Massen entsprechend hoch sind.

Bereits bekannt ist auch eine Spindel für Schleifmaschinen, bei der die das äußere Gehäuse bildenden beiden Spindelteile durch einen als Bajonettverschluß ausgebildeten Schnellverschluß kuppelbar sind und die eine darin gelagerte und im Bereich einer Schnellkupplung unterteilte Mitnehmerwelle für ein auswechselbares Schleifwerkzeug aufweisen (vgl. DE-PS 33 34 001).

Diese vorbekannte Werkzeugspindel hat den Vorteil, daß in axialer Richtung beidseits des Schnellverschlusses ring- bzw. zylinderförmige Paßflächen die beim Betrieb der entsprechenden Werkzeugmaschine entstehenden Biege- und Schleifkräfte aufnehmen und diese nicht von dem Schnellverschluß selbst übertragen werden müssen. Sie hat jedoch den Nachteil, daß ihr als Schnellverschluß dienender Bajonettverschluß manuell verschlossen und gelöst werden muß, geringfügige Toleranzen zwischen den Spindelteilen kaum auszugleichen vermag und sich weniger gut für höhere Umdrehungszahlen eignet.

Es besteht daher die Aufgabe, eine Spindel zu schaffen, die eine hohe Genauigkeit und Festigkeit trotz schneller Austauschbarkeit der Spindelteile aufweist und die sich gleichzeitig auch für Werkzeugmaschinen mit hohen Umdrehungszahlen eignet.

Die erfindungsgemäße Lösung dieser Aufgabe besteht insbesondere darin, daß der Schnellverschluß Verriegelungselemente aufweist, die in einem der beiden Spindelteile bewegbar geführt sind und in Verriegelungsstellung jeweils mit einem abgeschrägten oder schräg stehenden Verriegelungsende in eine Aussparung des anderen Spindelteils eingreifen und daß die Verriegelungselemente einen Antrieb für eine maschinelle Verriegelung und/oder Entriegelung haben, wobei in Verriegelungsstellung durch die Schräge des abgeschrägten oder schräg stehenden Verriegelungsendes eine den werkzeugseitigen Spindelteil in seine Gebrauchsstellung drückende axiale Andruckkraft vorgesehen ist.

Die Verriegelungselemente sorgen dabei für eine feste Verbindung der beiden gegen jeweils andere austauschbaren Spindelteile. Die maschinelle Ver- und/oder Entriegelung begünstigt und erleichtert dabei die schnelle und einfache Austauschbarkeit der Spindelteile. Die Schräge des abgeschrägten oder schräg stehenden Verriegelungsendes drückt die Spindelteile bis zum Steck-Anschlag und/oder der -Anschlagsfläche fest gegeneinander. Durch den Anpreßdruck können geringere Toleranzen zwischen den Spindelteilen noch ausgeglichen werden.

Die erfindungsgemäße Spindel weist dadurch eine hohe Genauigkeit und Festigkeit auf und begünstigt eine schnelle und einfache Austauschbarkeit ihrer Spindelteile. Da mit dem Werkzeug lediglich die unterteilte Mitnehmerwelle und ihre Schnellkupplung während des Gebrauchs der erfindungsgemäßen Spindel rotiert und die beiden Spindelteile, die Verriegelungselemente sowie der Antrieb für eine maschinnelle Ver- und/oder Entriegelung feststehend ausgebildet sind, sind die rotierenden Massen bei dieser Spindel vergleichsweise gering. Dadurch und durch die feste und präzise Verbindung der beiden Spindelteile in Gebrauchsstellung eignet sich die erfindungsgemäße Spindel auch für hohe Umdrehungszahlen von 100.000 Umdrehungen pro Minute oder mehr.

Da in der Regel mit dem Werkzeug der werkzeugseitige Spindelteil gewechselt wird, ist es vorteilhaft, wenn dieser verhältnismäßig kompakt und leicht ausgebildet ist. Es ist daher zweckmäßig, wenn der werkzeugseitige Spindelteil in den antriebsseitigen Spindelteil steckbar ist und wenn die Verriegelungselemente im antriebsseitigen Spindelteil bewegbar geführt sind und in Verriegelungsstellung in einer Aussparung des werkzeugseitigen Spindelteiles eingreifen. Im antriebsseitigen Spindelteil steht für die Unterbringung der Verriegelungselemente ausreichend Platz zur Verfügung.

Ein Vorschlag gemäß der Erfindung sieht vor, daß die Verriegelungselemente einen hydraulischen oder pneumatischen Antrieb zur Verriegelung und/oder Entriegelung haben. Hydraulische oder pneumatische Antriebe können einfach sowie platzsparend und dennoch leistungsstark ausgebildet werden.

Eine einfache Ausführung könnte beispielsweise darin bestehen, daß der Antrieb der Verriegelungselemente jeweils einen in einem Druckmittel-Zylinder geführten Kolben aufweist.

Bei der Verwendung hydraulischer oder pneumatischer Antriebe sollte jedoch sichergestellt sein, daß auch bei einem Druckabfall die eventuell auch im Betrieb befindlichen Spindelteile in Gebrauchsstellung verbleiben. Dies kann dadurch sichergestellt werden, daß die Verriegelungselemente jeweils über wenigstens eine Feder in Verriegelungsstellung gehalten und durch ihren maschinellen Antrieb in Entriegelungsstellung bewegbar sind.

Eine einfache Ausführung des Schnellverschlusses und seiner Verriegelungselemente kann beispielsweise darin bestehen, daß die Verriegelungselemente stiftförmig oder bolzenförmig ausgebildet und vorzugsweise mit einer Stirnfläche des im Druckmittel-Zylinder geführten Kolbens mittig verbunden sind.

Vorzugsweise ist dabei jedes Verriegelungselement durch eine als Druckfeder ausgebildete Feder in Verriegelungsstellung gehalten, die die dem Verriegelungselement abgewandte Stirnfläche des Kolbens druckbeaufschlagt. Dadurch kann das Verriegelungselement und sein Antrieb aus einigen wenigen, einfach ausgebildeten Teilen zusammengesetzt werden.

Eine Weiterbildung der Erfindung sieht vor, daß die Verriegelungsenden in Verriegelungsstellung in eine als Kerbung oder vorzugsweise als Ringnut ausgebildete Aussparung eingreifen. Insbesondere eine als Ringnut ausgebildete Aussparung ist mit geringem Herstellungsaufwand verbunden. Möglich ist, den Schnellverschluß so auszubilden, daß das Verriegelungselement und vorzugsweise sein Antrieb radial angeordnet ist und daß das Verriegelungsende abgeschrägt ist und eine in Verriegelungsstellung eine axiale Andruckkraft entfaltende Schräge aufweist.

Bevorzugt wird jedoch eine Ausführung, bei der das gesamte Verriegelungselement und vorzugsweise sein als Druckmittel-Zylinder ausgebildeter Antrieb schräg angeordnet ist. Dies hat den Vorteil, daß auch ein noch nicht vollständig bis zum Anschlag eingestecktes Steckteil durch die schräg stehenden Verriegelungselement gegen und in das andere Steckteil gepreßt wird.

Um eine möglichst feste Verbindung und Verriegelung der Spindelteile in Gebrauchsstellung zu erreichen, ist es vorteilhaft, wenn wenigstens drei, vorzugsweise fünf Verriegelungselemente über den Umfang des Spindelteiles gleichmäßig verteilt angeordnet sind.

In weiterer Ausbildung der Erfindung weisen die Spindelteile im Steckbereich eine stirnseitige und vorzugsweise als Anschlag dienende Paßfläche und/oder eine ein- oder beidseitig vom Eingriffsbereich der Riegelenden angeordnete Paßfläche auf. Diese Paßflächen sichern die Genauigkeit der erfindungsgemäßen Spindel und begünstigen die mit dieser Spindel erreichbare Präzision der auf ihr erstellten Werkstücke. Zudem nehmen sie die während eines Bearbeitungsvorganges entstehenden Biege- und dgl. Kräfte auf, wodurch der Schnellverschluß entsprechend entlastet wird.

Nach einem weiterbildenden Vorschlag berühren sich die Spindelteile an einer konisch ausgebildeten Paßfläche. Durch die konische Ausbildung dieser Paßfläche wird zusätzlich noch das Zusammen- und Ineinanderstecken der Spindelteile erleichtert. Gleichzeitig kann auch eine solche Paßfläche als axialer Steck-Anschlag dienen.

Eine Ausgestaltung der Erfindung von eigener schutzwürdiger Bedeutung kann darin bestehen, daß die Spindel gegensinnig zu den Verriegelungsenden abgeschrägte oder gegensinnig zu den Verriegelungselementen schräg stehende, die Spindelteile beim Entriegeln trennende Auswerfer aufweist. Während die Schräge der Verriegelungsenden eine den werkzeugseitigen Spindelteil in seine Gebrauchsstellung drückende axiale Andruckkraft entfaltet, drückt der entsprechend ausgebildete Auswerfer mit seiner Schräge die Spindelteile beim Entriegeln auseinander. Etwa zum Lösen von hydraulisch über Verriegelungselemente in Gebrauchsstellung gehaltenen Spindelteilen, insbesondere wenn diese eine konische Paßfläche aufweisen, kann ein gewisser Kraftaufwand notwendig sein. Um auch in diesen Fällen eine einfache und schnelle Handhabung der erfindungsgemäßen Spindel zu ermöglichen und um die Handhabung und das Lösen der Spindelteile noch weiter zu automatisieren, kann die Spindel mit die Spindelteile beim Entriegeln trennenden Auswerfern ausgebildet werden. Eine besonders einfache und vorteilhafte Ausbildung ergibt sich, wenn die Auswerfer durch Federn in eine Ruhestellung zurückgehalten und maschinell vorzugsweise durch jeweils einen in einem Druckmittel-Zylinder geführten Kolben während des Entriegelns in eine Auswerfstellung bewegbar sind. Auf diese Weise können die Auswerfer und die Verriegelungselemente praktisch gleichzeitig durch Druckmittelzufuhr angesteuert und bewegt werden.

Dabei ist es besonders vorteilhaft, wenn Verriegelungselemente und Auswerfer eine gemeinsame Druckquelle haben und wenn eine Verzögerungseinrichtung zur zeitversetzten Entriegelung der Verriegelungselemente und dann der Auswerfer vorgesehen ist, wobei diese Verzögerungseinrichtung vorzugsweise als ein die Druckmittel-Zylinder von Verriegelungselement und Auswerfer verbindender Nebenkanal ausgebildet ist, dessen Durchlaßöffnung in der Zylinderwand des Druckmittel-Zylinders des Verriegelungselementes in Verriegelungsstellung durch die Umfangsfläche des darin geführten Kolbens abgedichtet ist. Beim Entriegeln werden zunächst die Verriegelungselemente druckmittelbeaufschlagt, wodurch sich jeweils die mit ihnen verbundenen Kolben in Entriegelungsstellung bewegen und gleichzeitig die Durchlaßöffnung des Nebenkanals freigeben. Mit Freigabe der Durchlaßöffnung kann das Druckmittel auch über den Nebenkanal in den Druckmittel-Zylinder der Auswerfer eindringen und diese - zeitversetzt - bewegen.
Durch eine solche Verzögerungseinrichtung wird vermieden, daß die Auswerfer die Spindelteile bereits auseinanderzudrücken versuchen, wenn die Verriegelungselemente sich noch nicht aus den Aussparungen beispielsweise des werkzeugseitigen Spindelteils bewegt haben. Dadurch wird der Schnellverschluß entlastet und ein übermäßiger Verschleiß vermieden.

Die Bewegung der Verriegelungselemente und der Auswerfer über eine gemeinsame Druckquelle und die Ausbildung der Verzögerungseinrichtung als ein deren Druckmittel-Zylinder verbindender Nebenkanal stellt eine besonders einfache und vorteilhafte Ausbildung dar.

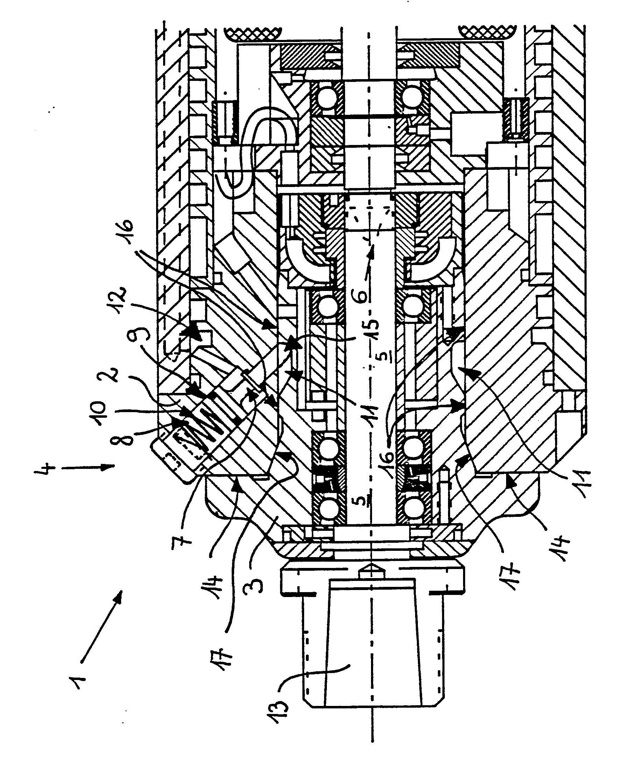

Nachstehend wird die Erfindung anhand eines vorteilhaften Ausführungsbeispieles in Verbindung mit der Zeichnung noch näher erläutert.

Die einzige Zeichnung zeigt eine nur teilweise abgebildete und mit 1 gekennzeichnete Spindel für Schleif-, Fräs-, Bohr- oder dgl. Werkzeugmaschinen.

Eine Werkzeugspindel 1 besteht im wesentlichen aus einem antriebsseitigen Spindelteil 2 und einem darin einsteckbaren werkzeugseitigen Spindelteil 3. Die Spindelteile 2 und 3 sind über einen Schnellverschluß 4 lösbar und auswechselbar gekuppelt. In der Spindel 1 ist eine ebenfalls unterteilte Mitnehmerwelle 5 gelagert, deren beiden Teile über eine Schnellkupplung 6 miteinander verbunden sind.

Der Schnellverschluß 4 weist eine ungerade Anzahl von Verriegelungselementen 7 auf, die über den Umfang des antriebsseitigen Spindelteils 2 gleichmäßig angeordnet und in ihm bewegbar geführt sind. Die Verriegelungselemente 7, von denen in der Zeichnung nur eines sichtbar ist, sind mit der Stirnseite eines in einem Druckmittel-Zylinder 8 geführten Kolbens 9 verbunden. Kolben 9 und Druckmittel-Zylinder 8 dienen als hydraulischer Antrieb für eine maschinelle Entriegelung. Zur Verriegelung des in das antriebsseitige Spindelteil 2 gesteckten Spindelteils 3 werden die stiftförmig ausgebildeten Verriegelungselement 7 durch eine Druckfeder 10 in Verriegelungsstellung gehalten, die die dem Verriegelungselement 7 abgewandte Stirnfläche des Kolbens 9 druckbeaufschlagt. Die Druckfeder 10 hält das Verriegelungselement 7 auch bei einem Druckverlust im Druckmittel-Zylinder 8 in Verriegelungsstellung. Die Verriegelungselemente 7 greifen in Verriegelungsstellung in eine als Ringnut 11 ausgebildete Aussparung des werkzeugseitigen Spindelteils 3 ein.

Durch Druckmittelzufuhr über eine Druckmittel-Zuführung 12 auf den Kolben 9 kann das Verriegelungselement 7 maschinell in eine Entriegelungsstellung gebracht werden. In Entriegelungsstellung der Verriegelungselemente 7 kann das werkzeugseitige Spindelteil 3 mitsamt dem auf einem Flansch 13 der Mitnehmerwelle 5 sitzenden Schleif-, Fräs-, Bohr- oder dgl. Werkzeug aus der Gebrauchsstellung mit dem antriebsseitigen Spindelteil 2 entnommen und bspw. gegen ein anderes, mit einem für einen anderen Bearbeitungsvorgang geeigneten Werkzeug verbundenen Spindelteil 3 ausgewechselt werden.
Die Spindelteile 2 und 3 weisen eine stirnseitige und als Anschlag dienende Paßfläche 14 auf, bis zu der das Spindelteil 3 in das Spindelteil 2 gesteckt werden kann und die daher auch als Steck-Anschlag dient. Beidseits vom Eingriffsbereich der in die Ringnut 11 eingreifenden Verriegelungsenden 15 der Verriegelungselemente 7 weist die Spindel 1 zusätzliche Paßflächen 16 auf. Diese Paßflächen 14 und 16 sichern die Genauigkeit der erfindungsgemäßen Spindel 1 und begünstigen die mit dieser Spindel 1 erreichbare Präzision der auf ihr erstellten Werkstücke. Zudem nehmen sie während eines Bearbeitungsvorganges die Biege- und dgl. Kräfte auf, wodurch der Schnellverschluß 4 entlastet wird. Darüber hinaus erleichtert eine die Paßflächen 14 und 16 ergänzende, konisch ausgebildete Paßfläche 17 das Einstecken des Spindelteils 3 in das Spindelteil 2.

Das gesamte Verriegelungselement 7 und ebenso sein als Druckmittel-Zylinder 8 ausgebildeter Antrieb sind im Spindelteil 2 schräg angeordnet; diese Schräge bewirkt eine den werkzeugseitigen Spindelteil in seine Gebrauchsstellung drückende axiale Andruckkraft, die das Spindelteil 2 und das Spindelteil 3 vor allem im Bereich der Paßfläche 14 gegeneinander drückt. Dadurch wird eine feste Verbindung zwischen den auswechselbaren Spindelteilen 2 und 3 erreicht, die die Spindel 1 auch für hohe Umdrehungszahlen befähigt. Durch diese axiale Andruckkraft können darüber hinaus eventuelle geringfügige Toleranzen zwischen den Spindelteilen 2 und 3 beim Verriegeln ausgeglichen werden, wodurch sich die Genauigkeit der Werkzeugspindel noch weiter erhöht.

**Ansprüche**

1. Spindel für Schleif-, Fräs-, Bohr- oder dgl. Werkzeugmaschinen mit einem äußeren Gehäuse und einer darin gelagerten, unterteilten und eine Schnellkupplung aufweisenden Mitnehmerwelle für ein vorzugsweise fliegend gelagertes und auswechselbares Schleif-, Fräs-, Bohr-oder dgl. Werkzeug, wobei die Werkzeugspindel ebenfalls unterteilt ist, vorzugsweise einen Steck-Anschlag und/oder eine -Anschlagsfläche und wenigstens eine Paßfläche aufweist und ihr werkzeugseitiger Spindelteil mittels Schnellverschluß mit dem antriebsseitigen Spindelteil lösbar und auswechselbar gekuppelt ist, **durch gekennzeichnet,** daß der Schnellverschluß (4) Verriegelungselemente (7) aufweist, die in einem der beiden Spindelteile (2, 3) bewegbar geführt sind und in Verriegelungsstellung jeweils mit einem abgeschrägten oder schräg stehenden Verriegelungsende (15) in eine Aussparung des anderen Spindelteils (2, 3) eingreifen und daß die Verriegelungselemente (7) einen Antrieb für eine maschinelle Verriegelung und/oder Entriegelung haben, wobei in Verriegelungsstellung durch die Schräge des abgeschrägten oder schräg stehenden Verriegelungsendes (15) eine den werkzeugseitigen Spindelteil (3) in seine Gebrauchsstellung drückende axiale Andruckkraft vorgesehen ist.

2. Spindel nach Anspruch 1, dadurch gekennzeichnet, daß der werkzeugseitige Spindelteil (3) in den antriebsseitigen Spindelteil (2) steckbar ist und daß die Verriegelungselemente (7) im antriebsseitigen Spindelteil (2) bewegbar geführt sind und in Verriegelungsstellung in eine Aussparung des werkzeugseitigen Spindelteils (3) eingreifen.

3. Spindel nach Anspruch 1 oder 2, dadurch gekennzeichnet, daß die Verriegelungselemente (7) einen hydraulischen oder pneumatischen Antrieb zur Verriegelung und/oder Entriegelung haben.

4. Spindel nach einem oder mehreren der Ansprüche 1 bis 3, dadurch gekennzeichnet, daß der Antrieb der Verriegelungselemente (7) jeweils einen in einem Druckmittel-Zylinder (8) geführten Kolben (9) aufweist.

5. Spindel nach einem oder mehreren der Ansprüche 1 bis 4, dadurch gekennzeichnet, daß die Verriegelungselemente (7) jeweils über wenigstens eine Feder in Verriegelungsstellung gehalten und durch ihren maschinellen Antrieb in Entriegelungsstellung bewegbar sind.

6. Spindel nach einem oder mehreren der Ansprüche 1 bis 5, dadurch gekennzeichnet, daß die Verriegelungselemente (7) stiftförmig oder bolzenförmig ausgebildet und vorzugsweise mit einer Stirnfläche des im Druckmittel-Zylinder (8) geführten Kolbens (9) mittig verbunden sind.

7. Spindel nach einem oder mehreren der Ansprüche 1 bis 6, dadurch gekennzeichnet, daß jedes Verriegelungselement (7) durch eine als Druckfeder (10) ausgebildete Feder in Verriegelungsstellung gehalten ist, die die dem Verriegelungselement (7) abgewandte Stirnfläche des Kolbens (9) druckbeaufschlagt.

8. Spindel nach einem oder mehreren der Ansprüche 1 bis 7, dadurch gekennzeichnet, daß die Verriegelungsenden (15) in Verriegelungsstellung in eine als Kerbung oder vorzugsweise als Ringnut (11) ausgebildete Aussparung eingreifen.

9. Spindel nach einem oder mehreren der Ansprüche 1 bis 8, dadurch gekennzeichnet, daß das gesamte Verriegelungselement (7) und vorzugsweise sein als Druckmittel-Zylinder (8) ausgebildeter Antrieb schräg angeordnet ist.

10. Spindel nach einem oder mehreren der Ansprüche 1 bis 8, dadurch gekennzeichnet, daß das Verriegelungselement und vorzugsweise sein Antrieb radial angeordnet ist und daß das Verriegelungsende abgeschrägt ist und eine in Verriegelungsstellung eine axiale Andruckkraft entfaltende Schräge aufweist.

11. Spindel nach einem oder mehreren der Ansprüche 1 bis 10, dadurch gekennzeichnet, daß wenigstens drei, vorzugsweise wenigstens fünf Verriegelungselemente (7) über den Umfang des Spindelteils (2) gleichmäßig verteilt angeordnet sind.

12. Spindel nach einem oder mehreren der Ansprüche 1 bis 11, dadurch gekennzeichnet, daß die Spindelteile (2, 3) im Steckbereich eine stirnseitige und vorzugsweise als Anschlag dienende Paßfläche (14) und/oder eine ein- oder beidseitig vom Eingriffsbereich der Verriegelungsenden (15) angeordnete Paßfläche (16) aufweisen.

13. Spindel nach einem oder mehreren der Ansprüche 1 bis 12, dadurch gekennzeichnet, daß sich die Spindelteile (2, 3) an einer konisch ausgebildeten Paßfläche (17) berühren.

14. Spindel, insbesondere nach einem oder mehreren der Ansprüche 1 bis 13, dadurch gekennzeichnet, daß die Spindel (1) gegensinnig zu den Verriegelungsenden (15) abgeschrägte oder gegensinnig zu den Verriegelungselementen (7) schräg stehende, die Spindelteile (2, 3) beim Entriegeln trennende Auswerfer aufweist.

15. Spindel nach Anspruch 14, dadurch gekennzeichnet, daß die Auswerfer durch Federn in einer Ruhestellung zurückgehalten und maschinell vorzugsweise durch jeweils einen in einem Druckmittel-Zylinder geführten Kolben (9) während des Entriegelns in eine Auswerfstellung bewegbar sind.

16. Spindel nach Anspruch 14 oder 15, dadurch gekennzeichnet, daß Verriegelungselemente (7) und Auswerfer eine gemeinsame Druckquelle haben und daß eine Verzögerungseinrichtung zur zeitversetzten Entriegelung der Verriegelungselemente und dann der Auswerfer vorgesehen ist, wobei diese Verzögerungseinrichtung vorzugsweise als ein die Druckmittel-Zylinder von Verriegelungselement (7) und Auswerfer verbindender Nebenkanal ausgebildet ist, dessen Durchlaßöffnung in der Zylinderwand des Druckmittel-Zylinders (8) des Verriegelungselementes (7) in Verriegelungsstellung durch die Umfangsfläche des darin geführten Kolbens (9) abgedichtet ist.